(19) Europäisches Patentamt / European Patent Office / Office européen des brevets

(11) **EP 3 928 375 B1**

(12) **EUROPEAN PATENT SPECIFICATION**

(45) Date of publication and mention
of the grant of the patent:
**09.04.2025  Bulletin 2025/15**

(21) Application number: **20758964.9**

(22) Date of filing: **19.02.2020**

(51) International Patent Classification (IPC):
$H01M\ 4/04\ ^{(2006.01)}$     $H01M\ 4/131\ ^{(2010.01)}$
$H01M\ 4/525\ ^{(2010.01)}$     $H01M\ 10/052\ ^{(2010.01)}$
$H01M\ 10/0562\ ^{(2010.01)}$     $H01M\ 4/62\ ^{(2006.01)}$
$H01M\ 4/505\ ^{(2010.01)}$     $H01M\ 4/02\ ^{(2006.01)}$

(52) Cooperative Patent Classification (CPC):
**H01M 4/131; H01M 4/505; H01M 4/525;**
**H01M 4/62; H01M 10/052; H01M 10/0562;**
H01M 2004/028; H01M 2220/20; H01M 2300/0071;
Y02E 60/10

(86) International application number:
**PCT/IB2020/051354**

(87) International publication number:
**WO 2020/170135 (27.08.2020 Gazette 2020/35)**

(54) **POWDEROUS SOLID ELECTROLYTE COMPOUND FOR SOLID-STATE RECHARGEABLE LITHIUM ION BATTERY**

PULVERFÖRMIGE FESTELEKTROLYTVERBINDUNG FÜR EINE WIEDERAUFLADBARE FESTKÖRPER-LITHIUM-IONEN-BATTERIE

COMPOSÉ D'ÉLECTROLYTE SOLIDE EN POUDRE POUR BATTERIE AU LITHIUM-ION RECHARGEABLE À ÉLECTROLYTE SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.02.2019   US 201962807833 P**
**20.02.2019   US 201962807863 P**
**13.03.2019   EP 19162577**
**13.03.2019   EP 19162591**
**24.05.2019   EP 19176362**

(43) Date of publication of application:
**29.12.2021   Bulletin 2021/52**

(73) Proprietors:
• **Umicore**
**1000 Brussels (BE)**
• **Umicore Korea Ltd.**
**Chungcheongnam-do 31093 (KR)**
• **Postech Academy-Industry Foundation**
**Gyeongsangbuk-do, 37673 (KR)**

(72) Inventors:
• **KANG, Byoungwoo**
**Pohang-si Gyeongsangbuk-do 37673 (KR)**
• **WOO, Seung-Jun**
**Pohang-si Gyeongsangbuk-do 37673 (KR)**

(74) Representative: **Umicore RDI Patent Department**
**Watertorenstraat 33**
**2250 Olen (BE)**

(56) References cited:
WO-A1-2018/089430        US-A1- 2007 087 269
US-A1- 2008 220 334        US-A1- 2015 171 465
US-A1- 2016 172 675

• E. I. BURMAKIN ET AL: "Lithium-conducting solid electrolytes of Li4GeO4-Li3PO4 system with additions of zirconium ions", RUSSIAN JOURNAL OF ELECTROCHEMISTRY, vol. 46, no. 2, 1 February 2010 (2010-02-01), RU, pages 243 - 246, XP055613480, ISSN: 1023-1935, DOI: 10.1134/S1023193510020199

- KAMPHORST J G ET AL: "Fast Li ionic conduction in solid solutions of the system Li"4GeO"4-Li"2ZnGeO"4-Li"3PO"4", SOLID STATE IONICS, NORTH HOLLAND PUB. COMPANY. AMSTERDAM; NL, NL, vol. 1, no. 3-4, 1 August 1980 (1980-08-01), pages 187 - 197, XP025807287, ISSN: 0167-2738, [retrieved on 19800801], DOI: 10.1016/0167-2738(80)90003-X

- SOKSEIHA MUY ET AL: "Lithium Conductivity and Meyer-Neldel Rule in Li3PO 4–Li3VO4–Li4GeO4 Lithium Superionic Conductors", CHEMISTRY OF MATERIALS, vol. 30, no. 16, 26 July 2018 (2018-07-26), US, pages 5573 - 5582, XP055613489, ISSN: 0897-4756, DOI: 10.1021/ acs.chemmater.8b01504

# EP 3 928 375 B1

**Description**

## TECHNICAL FIELD AND BACKGROUND

This invention relates to a solid electrolyte (SE) for solid-state rechargeable lithium-ion batteries suitable for electric vehicle (EV) applications. The solid electrolyte according to the invention has an improved lithium ionic conductivity.

Along with the developments of EVs, it comes also a demand for lithium-ion batteries as a possible constant source of power for such applications.

Aside the zero-emission aspect, additional requirements rendering a battery eligible for EV applications should therefore include: high capacity, longer cycle lives, lower cost, and better safety.

Most of the past and ongoing research on batteries usually emphasizes on the use of a liquid electrolyte, since such an electrolyte has a high lithium ionic conductivity of around $10^{-2}$ S/cm at room temperature (measured for an electrolyte composed of ethylene carbonate/dimethyl carbonate EC/DMC 1M $LiPF_6$) and provides a good contact with electrodes through wetting. However, batteries containing liquid electrolytes imply concerns since liquid electrolytes are usually flammable.

Solid electrolyte-based batteries are considerably safer and can be an alternative to liquid electrolyte-based batteries for the power source of electric vehicles. Since the decomposition temperature of SE is higher than the liquid electrolyte, an EV comprising such a SE-based battery, instead of a liquid electrolyte-based battery, would be safer and its battery manufacturing would also be safer. Aside from the clear advantage that a SE-based battery is much safer than a liquid electrolyte-based battery, a SE-based battery is also more compact than liquid electrolyte-based batteries, and therefore lead to higher power densities

However, it is also true that, compared to liquid electrolyte, a SE has a lower lithium ionic conductivity (typically included between $10^{-7}$ to $10^{-6}$ S/cm). The lower lithium ionic conductivity in a SE is due to the higher migration energy of lithium ions.

Well-known (inorganic) types of SE suitable for solid-state rechargeable lithium-ion batteries (SSB) which have been mainly explored are the La, Zr comprising garnet and the LSPO (lithium silicon phosphorus oxide) - LISICON (lithium superionic conductor) electrolyte having a general formula: $Li_{4\pm x}Si_{1-x}P_xO_4$. The La, Zr comprising garnet, especially the cubic garnet ($Li_7La_3Zr_2O_{12}$), shows a high conductivity. However, those materials are expensive due to the La and Zr content. This compound also needs to be synthesized at a temperature higher than 1000°C which is not desired because of the volatility of lithium at the high temperature. The LSPO is well-known for its high chemical and electrochemical stability, high mechanical strength, and high electrochemical oxidation voltage, making such an electrolyte a promising candidate for EV applications.

LSPO compounds, like $Li_{3.5}Si_{0.5}P_{0.5}O_4$, have a relatively low lithium ionic conductivity. $Li_{3.5}Si_{0.5}P_{0.5}O_4$, is a solid solution of $Li_4SiO_4$ and $Li_3PO_4$ having a crystal structure of $\gamma$-$Li_3PO_4$ with orthorhombic unit cell and tetrahedrally coordinated cations. In the scope of the present invention, a solid solution (also called solid-state solution) refers to a multicomponent solid-state solution as a result of a mixture of one or more solutes in a solvent. In particular, the solutes can be atoms or groups of atoms (or compounds). Such a multicomponent system is considered a solution rather than a compound when the crystal structure of the solvent remains unchanged by addition of the solutes, and when the chemical components remain in a single homogeneous phase. In the system, the solvent usually is a component with the largest portion and in this case is $Li_3PO_4$. The crystal structure of the solvent component is maintained after blending whereas the other component (solute, e.g. $Li_4SiO_4$) dissolves in the solvent structure instead of forming a distinct compound having a structure that deviates from the structure of the solvent.

In Solid State Ionics (2015), 283, 109-114, Wang, Dawei et al. studied the enhancement of lithium ionic conductivity of LSPO by an addition of $Li_3BO_3$. The highest lithium ionic conductivity was $6.5 \times 10^{-6}$ S/cm at 20% of $Li_3BO_3$ addition compared to $3.6 \times 10^{-6}$ S/cm for 0% addition. Another study conducted by Choi, Ji-won et al. in Solid State Ionics (2016), 289, 173-179, explored the effect of Al cation substitution in $0.7Li_4SiO_4 + 0.3Li_3PO_4$ solid solution system. The lithium ionic conductivity of $7.7 \times 10^{-6}$ S/cm was achieved at room temperature by the addition of 10 mol% Al.

Sokseiha et al. in Chem. Mater. (2018), 30, 5573-5582 contemplates $Li_3PO_4$-$Li_3VO_4$-$Li_4GeO_4$ systems.

Kamphorst et. al. in Solid State Ionics (1980), 1, 187-197 discloses $Li_4GeO_4$-$Li_2ZnGeO_4$-$Li_3PO_4$ systems.

Sokseiha et al and Kamphorst et al specify that $Li_4SiO_4$-$Li_3PO_3$ solid solutions have a lower conductivity than $Li_4GeO_4$-$Li_3PO_3$ teaching away from a possible substitution of Ge with Si.

Burmakin et. al. in Russian Journal of Electrochemistry (2010), 46, No. 2, 243-246 discloses a lithium germanium phosphate solid electrolyte doped with a tetravalent cation, Zr like : $Li_{3.75}Ge_{0.70}Zr_{0.05}P_{0.25}O_4$, $Li_{3.50}ZN_{0.125}Ge_{0.75}P_{0.25}O_4$, respectively. The Ge content in these formulation would not allow the obtention of a solid solution in a LSPO-based SE.

Although noticeable, these attempts to achieve a solid solution of a LSPO-based electrolyte are still below a desired threshold of at least $0.50 \times 10^{-5}$ (or $5.0 \times 10^{-6}$) S/cm required so that a solid-state battery made from said electrolyte is a tangible alternative to current liquid electrolyte-based batteries.

3

Certainly, there is a need for improving the lithium ionic conductivity of LSPO-based electrolyte so as to render the use of solid-state batteries made from such an electrolyte more performant and therefore more attractive in the field of EV applications.

It is therefore an object of the present invention to provide a LSPO-based SE having an improved lithium ionic conductivity whilst retaining a solid solution, which is a prerequisite for the use of such a SE in a solid-state secondary battery suitable for EV applications.

Metallic Li can be used in the scope of the present invention as an anode of a SSB comprising the electrolyte according to the invention.

Provided that the SE according to the present invention can be destined to be contacted to a Li metal-based anode, it must therefore be compatible to said Li metal-based anode of the SSB, meaning that the SE while contacting said anode must remain chemically stable.

## SUMMARY OF THE INVENTION

A solid electrolyte having an improved lithium ionic conductivity whilst retaining a solid solution and being chemically and thermally stable while contacting a Li metal anode is achieved by providing a solid solution according to claim 1 which comprises a LSPO-based electrolyte comprising germanium (Ge) up to 60 mol%. A Ge doped LSPO is referenced hereunder as "LSPGO".

If a LSPGO-based electrolyte comprises Ge of superior to 60 mol%, it comprises at least one impurity phase (i.e. $Li_2SiO_3$), and such a $Li_2SiO_3$-bearing LSPGO-based electrolyte is not a solid solution according to the present invention. A similar impurity phase is observed in Burmakin et. al. ($Li_2ZrO_3$ in this case) for a high content of Ge.

In the framework of the present invention, it has been observed that by integrating up to 60 mol% of Ge in a solid solution of LSPO-based electrolyte it was possible to preserve said solid solution property together with a noticeable improvement of the lithium ionic conduction to a minimal value of $0.50 \times 10^{-5}$ S/cm, which constitutes a significant contribution to what is currently known from the prior art.

It has also been demonstrated that the electrolyte according to the present invention is stable in presence of a Li metal foil, confirming its suitability in a SSB wherein a Li metal foil is used as an anode.

The present invention concerns the following embodiments:

1.- A solid solution electrolyte suitable for solid-state rechargeable lithium ion battery comprising a compound having a general formula $Li_{(3.5+L+x)}Si_{(0.5+s-x)}P_{(0.5+p-x)}Ge_{2x}O_{4+a}$ wherein

$-0.10 \leq L \leq 0.10$, $-0.10 \leq s \leq 0.10$, $-0.10 \leq p \leq 0.10$, $-0.40 \leq a \leq 0.40$, and
$0.00 < x \leq 0.30$.

In a first aspect of the embodiment 1, $0.05 \leq x \leq 0.30$, preferably $0.10 \leq x \leq 0.30$.

In a second aspect of the embodiment 1, $0.15 \leq x \leq 0.30$, preferably $0.20 \leq x \leq 0.30$.

2.- The solid solution electrolyte according to embodiment 1 wherein said compound has a general formula: $Li_{(3.5+x)}Si_{(0.5-x)}P_{(0.5-x)}Ge_{2x}O_4$.

3.- The solid solution electrolyte according to the embodiment 1 or 2, having a lithium ionic conductivity of at least $10^{-5}$ S/cm at 25°C.

4.-The solid solution electrolyte according to any of the preceding embodiments, wherein $0.25 \leq x \leq 0.30$.

5.- The solid solution electrolyte according to any of the preceding embodiments, having a lithium ionic conductivity measured at 25°C superior or equal to $2.0 \times 10^{-5}$ S/cm and inferior or equal to $3.0 \times 10^{-5}$ S/cm, preferably superior or equal to $2.5 \times 10^{-5}$ S/cm and inferior or equal to $3.0 \times 10^{-5}$ S/cm.

6.- The solid solution electrolyte according to any of the preceding embodiments, comprising a crystal structure having an XRD pattern measured at 25°C and at a wavelength of 1.5418Å comprising a first peak having a first intensity and a second peak having a second intensity, said first and second peaks being present in a range of $2\theta$ superior or equal to 27.5 and inferior or to $30.0 \pm 0.5°$, said XRD pattern being furthermore free of peaks at $2\theta > 37.0 \pm 0.5°$ having an intensity superior to said first or second intensity.

7.- The solid solution electrolyte according to any of the preceding embodiments, comprising a crystal structure having an XRD pattern measured at 25°C and at a wavelength of 1.5418Å comprising a first peak having a first intensity and a second peak having a second intensity, said first and second peaks being present in a first range of 2θ superior or equal to 27.5 and inferior or to 30.0±0.5°, wherein in a second range of 2θ superior or equal to 21.0 and inferior or to 25.0±0.5°said XRD pattern has no more than three additional peaks, each of said three additional peaks having an intensity superior to said first or second intensity.

8.- The solid solution electrolyte according to any of the preceding embodiments, comprising a crystal structure having an XRD pattern measured at 25°C and at a wavelength of 1.5418Å comprising a first peak having a first intensity and a second peak having a second intensity, said first and second peaks being present in a first range of 2θ superior or equal to 27.5 and inferior or to 30.0±0.5°, wherein in a second range of 2θ superior or equal to 34.0 and inferior or to 36.0±0.5°, said XRD pattern has no more than three additional peaks, each of said three additional peaks having an intensity superior to said first or second intensity.

9.- A solid-state rechargeable lithium ion battery comprising the solid solution electrolyte according to any of the previous embodiments.

10.- A solid-state rechargeable lithium ion battery comprising a negative electrode having a Li metal-base anode contacting the solid solution electrolyte according to any of the embodiments 1 to 9.

11.- Use of the solid-state battery according to the embodiment 9 or 10 in an electric vehicle, in particular in an electric car, wherein the operating voltage of said battery is superior or equal to 200 V and inferior or equal to 500 V.

12.- A catholyte comprising the solid solution electrolyte according to any of the preceding embodiments and a cathode material having the general formula: $Li_{1+k}M'_{1-k}O_2$ where $M'=Ni_{1-x'-y'-z'}Mn_{x'}Co_{y'}A_{z'}$ with $-0.05 \leq k \leq 0.05$, $0 \leq x' \leq 0.40$, $0.05 \leq y' \leq 0.40$, and $0 \leq z' \leq 0.05$, wherein A is a doping element which is different to Li, M' and O, said positive active material powder comprising particles having a layered R-3m crystal structure, said catholyte having a $D99 \leq 50\mu m$ and an ionic conductivity of at least $1.0 \times 10^{-6}$ S/m

## BRIEF DESCRIPTION OF THE FIGURES

Figure 1. Comparison of Electrochemical Impedance Spectra (EIS) for sample with various Ge dopants (x in $Li_{(3.5+x)}Si_{(0.5-x)}P_{(0.5-x)}Ge_{2x}O_{4+a}$) in Example 1 and Comparative Example 1
Figure 2. Variation of lithium ionic conductivity versus the amount of Ge dopants (x in $Li_{(3.5+x)}Si_{(0.5-x)}P_{(0.5-x)}Ge_{2x}O_{4+a}$) in Example 1 and Comparative Example 1
Figure 3. Comparison of X-ray diffraction pattern of Example 1 and Comparative Example 1
Figure 4. Fourier-transform infrared spectrum of EX1-A, EX1-B, EX1-C, and Comparative Example 1 showing transmittance in (%) and wavenumber in ($cm^{-1}$)
Figure 5. Comparison of X-ray diffraction pattern of Comparative Examples 1 and 2
Figure 6. Comparison of X-ray diffraction pattern of LSPO (a) before exposure to molten Li metal at 250°C and (b) after 15 minutes exposure
Figure 7. Comparison of voltage vs. capacity graph of EX2-CAT-A and CEX3-CAT-B

## DETAILED DESCRIPTION

In the following detailed description, preferred embodiments are detailed so as to enable practice of the invention.
This invention discloses a germanium bearing LSPO compounds having a general formula $Li_{(3.5+x)}Si_{(0.5-x)}P_{(0.5-x)}Ge_{2x}O_{4+a}$ (LSPGO) wherein $0.00 < x \leq 0.30$ and $-0.40 \leq a \leq 0.40$. It is a solid solution of $Li_4GeO_4$, $Li_3PO_4$, and $Li_4SiO_4$. When Ge equally substitutes Si and P in a LSPO compound, it is observed that the lithium ionic conductivity of the compound according to claim 1 significantly increases (reaching at least $10^{-5}$ S/cm) for x values higher or equal to 0.10. Moreover, the conductivity of $Li_{(3.5+x)}Si_{(0.5-x)}P_{(0.5-x)}Ge_{2x}O_{4+a}$ wherein $0.10 \leq x \leq 0.30$ gradually increases and it is maximized when x is 0.30. In particular, the conductivity of the compound according to claim 1 is unexpectedly higher (higher than $2.0\ 10^{-5}$ S/cm) for the narrow range: $0.20 < x \leq 0.30$, in particular for $0.25 \leq x \leq 0.30$. Compared to the broader range of Ge content of claim 1, this narrower range leads to an increase of the lithium ionic conductivity by a 1.5 to 3.0 factor, which is remarkable.
Such a high conductivity of at least $10^{-5}$ S/cm has never been reported yet for solid solution LSPO type of electrolytes.
In addition, compatibility of the electrolyte according to the present invention with a Li metal anode.

This invention is also inclusive of a catholyte compound made from a mixture of a NMC type of positive electrode active material and the germanium bearing LSPO compound according to the present invention.

Both polycrystalline and monolithic NMC can be used as a positive electrode active material in the catholyte according to the present invention. A "monolithic" morphology refers here to a morphology where a secondary particle contains basically only one primary particle. In the literature they are also called single crystal material, mono-crystal material, and one-body material. The preferred shape of the primary particle could be described as pebble stone shaped. The monolithic morphology can be achieved by using a high sintering temperature, a longer sintering time, and the use of a higher excess of lithium. A "polycrystalline" morphology refers to a morphology where a secondary particle contains more than one primary particles.

The (solid-state) catholyte material is prepared by mixing the germanium bearing LSPO compound with the NMC composition so as to produce the catholyte which is subjected to a heat treatment at 600°C~800°C for 1~20 hours under oxidizing atmosphere. In particular, the method for producing said catholyte is a co-sintering-based process wherein the germanium bearing LSPO and the NMC compositions are blended so as to provide a mixture which is then sintered.

There are several ways to obtain each of the compositions of the germanium bearing LSPO and NMC positive electrode active material in the catholyte. Whereas the difference of the median particle sizes (D50) between the solid electrolyte and positive electrode active material in the catholyte is superior or equal to $2\mu m$, they can be separated using a classifier such the elbow jet air classifier (https://elcanindustries.com/elbow-jet-air-classifier/). The compositions of separate particles are measured according to the protocol disclosed in the section F) Inductively Coupled Plasma method so as to determine each of the compositions of the germanium bearing LSPO material and NMC positive electrode active material in the catholyte.

The use of an Electron Energy Loss Spectroscopy (EELS) in a Transmission Electron Microscope (TEM) is another example for obtaining each of the compositions of the germanium bearing LSPO material and NMC positive electrode active material in the catholyte. The elements and their atomic amount can be obtained directly by measuring the EELS of cross-sectional germanium bearing LSPO particles and NMC positive electrode active material particles separately.

The following analysis methods are used in the Examples:

**A) Electrochemical Impedance Spectroscopy (EIS)**

A cylindrical pellet is prepared by following procedure. 0.175g of a powderous solid electrolyte compound sample is put on a mold having a diameter of 1.275cm. A pressure of 230MPa is applied to the mold. The pellet is sintered at 700°C for 3 hours in oxygen atmosphere. Silver paste is painted on both sides of the pellet to have a sample configuration of Ag/pellet/Ag in order to allow EIS measurements. Standard deviation of this measurement is $2.0 \times 10^{-8}$.

EIS is performed using an Ivium-n-Stat instrument, a potentiostat/galvanostat with an integrated frequency response analyzer. This instrument is common to be used in the battery/fuel cell-testing to collect impedance response against frequency sweep. The measurement frequency range is from $10^6$Hz to $10^{-1}$Hz. The setting point/decade is 10 and the setting voltage is 0.05V. Measurement is conducted at room temperature (at 25°C). The lithium ionic conductivity is calculated by below equation:

$$\sigma = \frac{L}{R \times A}$$

, where L is the thickness of the pellet, A is the area of the sample, and R is the resistance obtained by the electrochemical impedance spectroscopy.

**B) X-ray Diffraction Test**

A cylindrical pellet is prepared by following procedure. 0.175g of a powderous solid electrolyte compound sample is put on a mold having a diameter of 1.275cm. A pressure of 230MPa is applied to the mold. The pellet is sintered at 700°C for 3 hours in oxygen atmosphere.

The X-ray diffraction pattern of the pellet sample is collected with a Rigaku X-Ray Diffractometer (D/MAX-2500/PC) using a Cu Ka radiation source emitting at a wavelength of 1.5418Å. The instrument configuration is set at: 1° Soller slit (SS), 1° divergence slit (DS) and 0.15mm reception slit (RS). Diffraction patterns are obtained in the range of 10 - 70° (2θ) with a scan speed of 4° per a minute. Obtained XRD patterns are analyzed by the Rietveld refinement method using X'Pert HighScore Plus software. The software is a powder pattern analysis tool with reliable Rietveld refinement analysis results.

## C) Fourier-transform infrared (FTIR) spectrometry

FTIR transmission spectrum for the LSPGO powder is collected using Thermo Scientific FTIR Spectrometer (Nicolet iS 50) in the wave number range of 1200 to 500 $cm^{-1}$, with a resolution of 4 $cm^{-1}$, and scan cycle of 32 scan.

## D) Particle Size Distribution

The catholyte powder samples used in the particle-size distribution (psd) measurements are prepared by hand grinding the catholyte powder samples using agate mortar and pestle. The psd is measured by using a Malvern Mastersizer 3000 with Hydro MV wet dispersion accessory after having dispersed each of the catholyte powder samples in an aqueous medium. In order to improve the dispersion of the catholyte powder, sufficient ultrasonic irradiation and stirring is applied, and an appropriate surfactant is introduced. D50 and D99 are defined as the particle size at 50% and 99% of the cumulative volume% distributions obtained from the Malvern Mastersizer 3000 with Hydro MV measurements.

## E) Coin cell Test

For the preparation of a positive electrode, a catholyte containing 0.16g of NMC, 0.03g conductor (Super P), and 0.125g of 8wt% PVDF binder are mixed in NMP solvent using a planetary centrifugal mixer (Thinky mixer) for 20 minutes. The homogenized slurry is spread on one side of an aluminum foil using a doctor blade coater with a 15$\mu$m gap. The slurry-coated foil is dried and punched as 8mm diameter circular shape. A Swagelok cell is assembled in an argon-filled glove box with the configuration of positive electrode, separator having a diameter of 13mm, and lithium foil having a diameter of 11mm as a negative electrode. 1M $LiPF_6$ in EC/DMC (1:1 wt%) is used as electrolyte. Each cell is cycled at 25°C using automatic battery cycler Wonatech-WBCS3000. The coin cell testing at 0.1C in the 4.3~2.5V/Li metal window range.

## F) Inductively Coupled Plasma (ICP)

The composition of a positive electrode active material, a solid electrolyte, and a catholyte is measured by the inductively coupled plasma (ICP) method using an Agillent ICP 720-ES. 1 gram of a powder sample is dissolved into 50mL high purity hydrochloric acid (at least 37wt% of HCl with respect to the total amount of solution) in an Erlenmeyer flask. The flask is covered by a watch glass and heated on a hot plate at 380°C until complete dissolution of the powder. After being cooled to room temperature, the solution from the Erlenmeyer flask is poured into a 250mL volumetric flask. Afterwards, the volumetric flask is filled with deionized water up to the 250mL mark, followed by a complete homogenization. An appropriate amount of solution is taken out by a pipette and transferred into a 250mL volumetric flask for a second dilution, where the volumetric flask is filled with internal standard and 10% hydrochloric acid up to the 250mL mark and then homogenized. Finally, this solution is used for ICP measurement.

The invention is further exemplified in the examples below. The following samples were prepared:

## Comparative Example 1

CEX1 having a general formula $Li_{3.50}Si_{0.50}P_{0.50}O_4$ was prepared by the following steps:

1) Mixing: $Li_2CO_3$, $SiO_2$, and $(NH_4)_2HPO_4$ with total weight of around 6.0g according to the corresponding molar ratio were put on a 250ml bottle with 140ml of deionized water and each 100g of Y doped $ZrO_2$ balls having 3, 5, and 10mm diameter. The bottle was rotated in a conventional ball mill equipment with 300RPM for 24 hours. The homogeneously mixed slurry was dried at 90°C for 12 hours.
2) Calcination: the dried mixture was calcined at 900°C for 6 hours in Ar atmosphere.
3) Pulverization: 1.4g of calcined powder was put on a 45ml bottle with 30ml of acetone and 3.4g of Y doped $ZrO_2$ balls having a dimeter of 1mm. The bottle was rotated in a conventional ball mill equipment with 500RPM for 6 hours. The pulverized powder was dried at 70°C for 6 hours.
4) Sintering: The dried powder was sintered at 700°C for 3 hours in oxygen atmosphere to get the final LSPO solid electrolyte compound.

## Example 1

Ge doped LSPO samples having a general formula $Li_{(3.5+x)}Si_{(0.5-x)}P_{(0.5-x)}Ge_{2x}O_4$ were prepared in the same manner as CEX1 except that different amount of $GeO_2$ was added and the amount of $Li_2CO_3$, $SiO_2$, and $(NH_4)_2HPO_4$ were adjusted in the mixing step according to the target molar ratios. EX1-A, EX1-B, EX1-C, EX1-D, EX1-E, and EX1-F had the x of 0.05, 0.10, 0.15, 0.20, 0.25, and 0.30, respectively.

**Comparative Example 2**

S doped LSPO samples CEX2-A1 and CEX2-A2 having a general formula $Li_{(3.5-3x)}Si_{(0.5-x)}P_{(0.5-x)}S_{2x}O_{4+a}$ were prepared in the same manner as samples in the Example 1 except that different amount of $Li_2SO_4$ was added instead of $GeO_2$. CEX2-A1 and CEX2-A2 had the x of 0.05 and 0.10, respectively.

Ga doped LSPO sample CEX2-B having a general formula $Li_{(3.5-3x)}Si_{(0.5-x)}P_{(0.5-x)}Ga_{2x}O_{4+a}$ was prepared in the same manner as samples in the Example 1 except that $Ga_2O_3$ was added instead of $GeO_2$. CEX2-B had the x of 0.05.

**Explanatory Example 1**

To examine the stability of electrolyte with Li metal, LSPGO samples of EX1-B is directly contacted with molten Li metal under Ar atmosphere. To this end, pellet of EX1-B is made by pressing 0.175g of EX1-A powder under 2349.7kgf/cm$^2$ pressure, followed by a sintering at 700°C for 3h under $O_2$ atmosphere. A stripe of Li foil is placed on a stainless-steel plate heated on 250°C hot plate (under controlled non-oxidizing atmosphere). The obtained molten Li is directly poured on the prepared EX1-B pellets and the pellets are observed for 15 minutes. This explanatory experiment is conducted in a glove box with Ar atmosphere. The pellet is visually observed/monitored so as to detect an eventual thermal runaway and the structure is examined using X-Ray Diffraction.

**Results**

Table 1. List of Examples and Comparative Examples with their properties

| Examples | Sample ID | Composition | x* | Conductivity (S/cm) | Volume (Å³) |
|---|---|---|---|---|---|
| Comparative example 1 | CEX1 | $Li_{3.50}Si_{0.50}P_{0.50}O_4$ | 0.00 | 4.4 × 10$^{-6}$ | 324.15 |
| Example 1 | EX1-A | $Li_{3.55}Si_{0.45}P_{0.45}Ge_{0.10}O_4$ | 0.05 | 7.2 × 10$^{-6}$ | 327.11 |
| | EX1-B | $Li_{3.60}Si_{0.40}P_{0.40}Ge_{0.20}O_4$ | 0.10 | 1.0 × 10$^{-5}$ | 329.96 |
| | EX1-C | $Li_{3.65}Si_{0.35}P_{0.35}Ge_{0.30}O_4$ | 0.15 | 1.4 × 10$^{-5}$ | 332.93 |
| | EX1-D | $Li_{3.70}Si_{0.30}P_{0.30}Ge_{0.40}O_4$ | 0.20 | 1.5 × 10$^{-5}$ | 335.73 |
| | EX1-E | $Li_{3.75}Si_{0.25}P_{0.25}Ge_{0.50}O_4$ | 0.25 | 2.7 × 10$^{-5}$ | 338.83 |
| | EX1-F | $Li_{3.80}Si_{0.20}P_{0.20}Ge_{0.60}O_4$ | 0.30 | 2.4 × 10$^{-5}$ | 340.76 |
| Comparative example 2 | CEX2-A1 | $Li_{3.35}Si_{0.45}P_{0.45}S_{0.10}O_4$ | 0.05 | 2.3 × 10$^{-6}$ | 324.27 |
| | CEX2-A2 | $Li_{3.20}Si_{0.40}P_{0.40}S_{0.20}O_4$ | 0.10 | 3.9 × 10$^{-7}$ | 323.58 |
| | CEX2-B | $Li_{3.65}Si_{0.45}P_{0.45}Ga_{0.10}O_4$ | 0.05 | 3.5 × 10$^{-6}$ | No solid solution |
| (* x in CEX1 and EX1-A to EX1-F with formula $Li_{(3.5+x)}Si_{(0.5-x)}P_{(0.5-x)}Ge_{2x}O_4$, in CEX2-A1 and CEX2-A2 with formula $Li_{(3.5-3x)}Si_{(0.5-x)}P_{(0.5-x)}S_{2x}O_4$, and in CEX2-B with formula $Li_{(3.5+3x)}Si_{(0.5-x)}P_{(0.5-x)}Ga_{2x}O_4$.) | | | | | |

**Enhanced conductivity of the LSPGO according to the present invention**

Table 1 summarizes the list of example and comparative example samples. It can be seen that LSPGO samples at x=0.05-0.30 (EX1-A to EX1-F) have higher lithium ionic conductivity than the LSPO sample (CEX1). As for S and Ga bearing LSPO (CEX2-A1, CEX2-A2, and CEX2-B), the lithium ionic conductivities are lower.

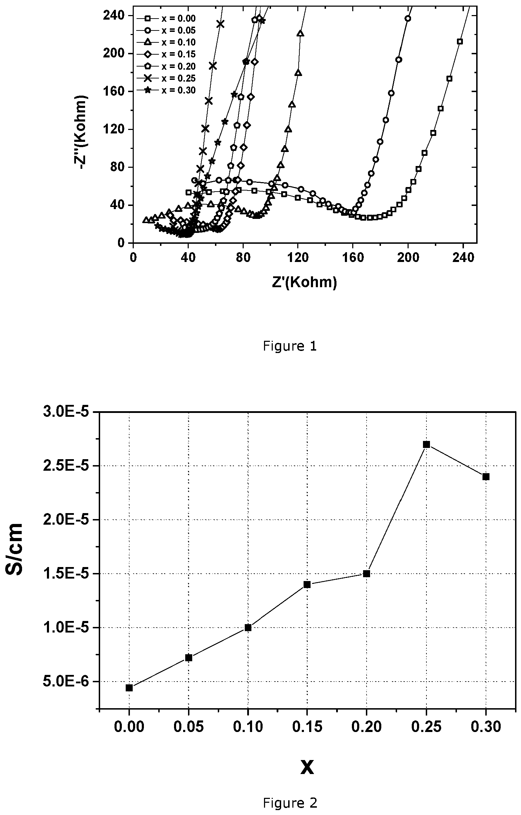

Figure 1 shows a typical Nyquist plot from EIS measurement $Li_{(3.5+x)}Si_{(0.5-x)}P_{(0.5-x)}Ge_{2x}O_{4+a}$ (x=0.00 to 0.30). The plot is composed of real part of impedance in X axis and imaginary part in Y axis. High frequency measurement appears on the left side of the graph forms a semicircle that is followed by a low angle spike as the result of the low frequency measurement. The semicircle formation corresponded to the lithium conduction in SE. The lithium ionic conductivity of CEX1 is $4.4 \times 10^{-6}$ at room temperature that is comparable with the earlier published works on LSPO. The reduction of the semicircle diameter with the higher Ge amount indicating lower resistance of sample suggesting a better conductivity.

Figure 2 shows the improvement of lithium ionic conductivity where the value increases proportionally with more Ge in the structure. The highest lithium ionic conductivity is 2.7x10$^{-5}$ at x=0.25 which is about 6 times of CEX1. When x is 0.30, the value reduces to 2.4x10$^{-5}$, concluding that 0.25 is an optimal concentration.

**Retention of the solid solution in the Ge-doped LSPO according to the invention**

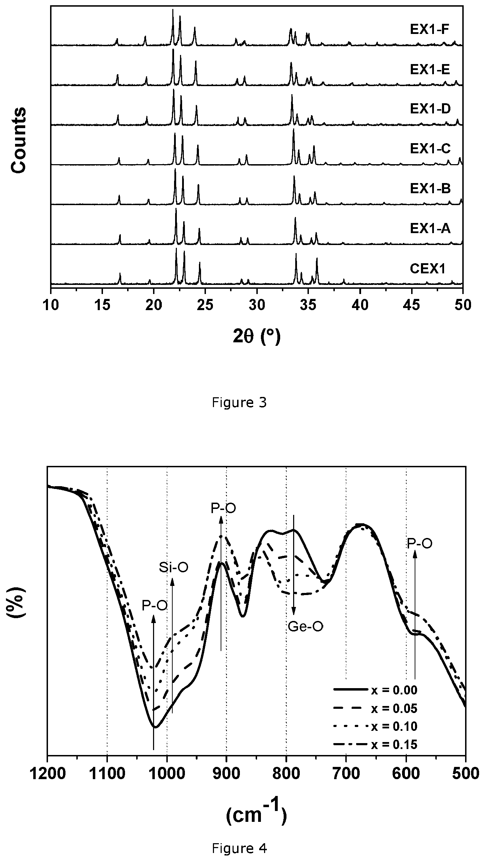

Figure 3 shows the XRD patterns of CEX1 (undoped electrolyte) and EX1-A to EX1-F. It is observed that Ge bearing LSPO samples have a single LISICON phase without impurity, demonstrating that Ge is well doped. In all graphs, the $\gamma$-$Li_3PO_4$ structure is maintained, indicated by the characteristic double peak at 28°-29° representing (121) and (200) planes as well as four consecutive peaks at 34°-36° correspond to (220), (131), (211), and (002) planes. The shifted peak positions to the left related with the larger crystal volume showed in Table 1. The observed single phase also acts as an evidence of solid solution formation for the Ge bearing LSPO.

Additionally, FTIR measurement is displayed in Figure 4 with the vibration bands of P-O, Si-O, and Ge-O marked. The vibration bands at $580cm^{-1}$, $910cm^{-1}$, and around $1050cm^{-1}$ correspond to the vibration modes of tetrahedron P-O while band in area of 985-1005 $cm^{-1}$ corresponds to the vibration modes of Si-O, also in tetrahedral structure. All bands show transmittance signal increase along with the addition of Ge in the structure. On the other hand, transmittance of $790cm^{-1}$ band which corresponds to Ge-O vibration decreases with the more Ge in the structure. It is concluded that the atomic substitution of Ge successfully occurred at Si and P sites without changing the structure. This observation matches with that of XRD where the structure of LSPO is maintained upon doping.

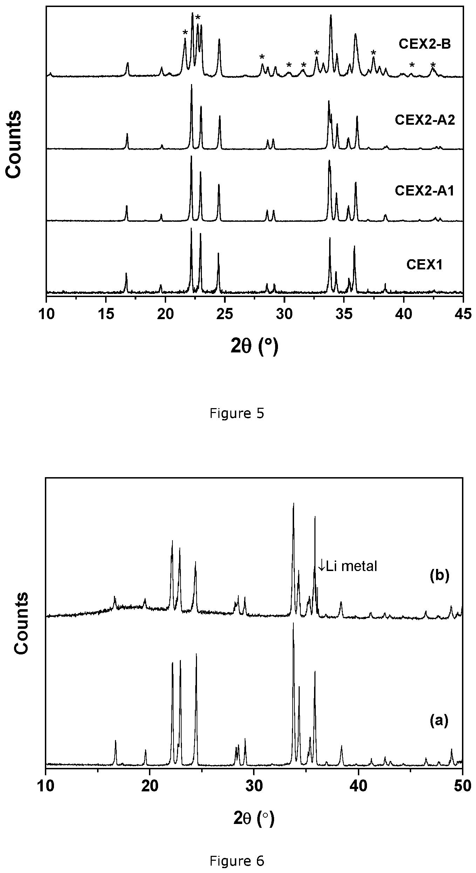

XRD of CEX2 are compared with CEX1 in Figure 5. The S bearing LSPO structure (CEX2-A) is still well maintained while Ga bearing LSPO structure (CEX2-B) has multiple impurity peaks marked with (*) in the graph. This indicating Ga is not easy to be doped in the LSPO system and solid solution is failed to form for CEX2-B.

**Chemical stability of the LSPGO with a Li metal foil**

Chemical stability of LSPGO with Li metal was examined through a direct contact with the molten Li metal.

LSPGO pellet XRD diffraction pattern after exposure with molten Li metal is compared with the original pattern before exposure as displayed in Figure 6. Both measurement produced diffractogram with the same peak location indicating the structure remain the same (there is no structural change as the result of reaction with Li metal). The pellet is also observed to be very stable upon contact without thermal runaway or any exothermic reaction.

**Example 2 (catholyte)**

A M-NMC622 compound having the target formula of $Li(Ni_{0.60}Mn_{0.20}Co_{0.20})O_2$ and a monolithic morphology is obtained through a double sintering process and a wet milling process running as follows:

1) Co-precipitation: mixed transition metal hydroxides with D50 of around $4\mu m$ are prepared by the process described in KR101547972B1 (from page 6 line 25 to page 7 line 32).

2) 1st blending: to obtain a lithium deficient sintered precursor, $Li_2CO_3$ and the co-precipitation product are homogenously blended with a Li/M' ratio of 0.85 in a Henschel mixer for 30 minutes so as to obtain a 1st blend.

3) 1st sintering: the 1st blend is sintered at 935°C for 10 hours under an oxygen containing atmosphere. The product obtained from this step is a powderous lithium deficient sintered precursor with Li/M'= 0.85.

4) Blending: the lithium deficient sintered precursor is blended with $LiOH \cdot H_2O$ to correct the Li stoichiometry to Li/M'=1.01. The blending is performed in a mixer for 30 minutes so as to obtain a 2nd blend.

5) 2nd sintering: the 2nd blend is sintered at 890°C for 10 hours in an oxygen containing atmosphere in a roller hearth kiln (RHK). The sintered blocks are crushed by a jaw crushing equipment.

6) Wet milling: To break the agglomerated intermediate particles into monolithic primary particles, a wet ball milling process is applied. 5L bottle is filled with 1L of deionized water, 5.4kg $ZrO_2$ balls, and 1kg of 2nd sintering product from process number 5. The bottle is rotated on a commercial ball mill equipment.

7) Healing firing step (3rd sintering): The wet milled product is heated at 750°C for 10 hours under oxygen containing atmosphere in a furnace. The sintered compound is sieved.

A catholyte material EX2-CAT-A is made by mixing M-NMC622 and EX1-B ($Li_{3.60}Si_{0.40}P_{0.40}Ge_{0.20}O_4$) according to a mixing ratio of 1:1 by weight, followed by a heat treatment at 700°C for 3 hours in an oxygen atmosphere (i.e. like air). EX1-B has a median particle size (D50) of $2\mu m$.

A catholyte material EX2-CAT-B is obtained through a similar manner as the preparation of EX2-CAT-A except that the mixture is heated at 600°C.

**Comparative Example 3 (catholyte)**

CEX3-CAT-A and CEX3-CAT-B are obtained through a similar manner as the preparation of EX2-CAT-A except that the mixture is heated at 500°C, 900°C, respectively, as displayed in Table 2.

Table 2. Particle size distribution and ionic conductivity of EX2 and CEX3 material

| Sample ID* | Co-sintering temperature (°C) | D50 (μm) | D99 (μm) | Ionic conductivity (S/cm) | First discharge capacity (mAh/g) |
|---|---|---|---|---|---|
| **EX2-CAT-A** | 700 | 10.2 | 34.7 | $\mathbf{1 \times 10^{-5}}$ | **176.4** |
| **EX2-CAT-B** | 600 | 10.3 | 31.0 | $2 \times 10^{-6}$ | -** |
| CEX3-CAT-A | 500 | 10.4 | 28.1 | $1 \times 10^{-7}$ | -** |
| CEX3-CAT-B | 900 | 10.5 | 143.0 | $9 \times 10^{-4}$ | 133.8 |

| * -CAT- stands for "catholyte". |
| ** - : not measured. |

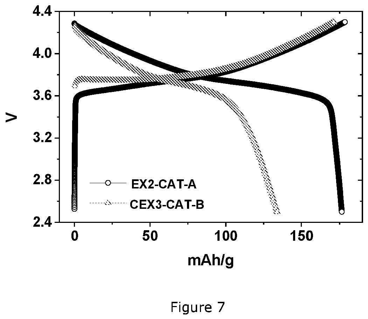

The results of the size distribution measurement as displayed in the Table 2 show that EX2-CAT-A, EX2-CAT-B, CEX3-CAT-A, and CEX3-CAT-B have a similar D50 at around 10.2-10.5μm. However, the D99 values are larger at the higher co-sintering temperature. For instance, the D99 of EX2-CAT-A (resulting from a sintering at 700°C) is 34.7μm while the D99 of CEX3-CAT-B (resulting from a co-sintering at 900°C) is 143.0μm. The coin cell characterization of EX2-CAT-A and CEX3-CAT-B as displayed in Figure 7 shows the effect of the co-sintering temperature to the electrochemical performance. Here, CEX3-CAT-B sintered at 900°C clearly shows a lower discharge capacity comparing to EX2-CAT-A sintered at 700°C.

On the other hand, co-sintering temperature lower than 600°C is also unpreferable. The ionic conductivity data provided in Table 2 also demonstrate that the ionic conductivity of the catholyte depends upon the co-sintering temperature, wherein the catholyte is more conductive at a higher co-sintering temperature. EX2-CAT-A which results from a co-sintering prepared at 700°C has an ionic conductivity of $10^{-5}$ S/cm while CEX3-CAT-A (resulting from a co-sintering at 500°C) has an ionic conductivity of $10^{-7}$ S/cm, i.e. a decrease of x100 is observed for this sample with respect to CEX3-CAT-A's ionic conductivity.

**Claims**

1. A solid solution electrolyte suitable for solid-state rechargeable lithium ion battery comprising a compound having a general formula $Li_{(3.5+L+x)}Si_{(0.5+s-x)}P_{(0.5+p-x)}Ge_{2x}O_{4+a}$ wherein

   $-0.10 \leq L \leq 0.10$, $-0.10 \leq s \leq 0.10$, $-0.10 \leq p \leq 0.10$, $-0.40 \leq a \leq 0.40$, and
   $0.0 < x \leq 0.30$, preferably $0.05 \leq x \leq 0.30$, more preferably $0.10 \leq x \leq 0.30$.

2. The solid solution electrolyte according to claim 1 wherein said compound has a general formula: $Li_{(3.5+x)}Si_{(0.5-x)}P_{(0.5-x)}Ge_{2x}O_4$.

3. The solid solution electrolyte according to claim 1 or 2, having a lithium ionic conductivity of at least $10^{-5}$ S/cm at room temperature.

4. The solid solution electrolyte according to claim 1 or 2, wherein
   $0.15 \leq x \leq 0.30$, preferably $0.20 \leq x \leq 0.30$, more preferably $0.25 \leq x \leq 0.30$.

5. The solid solution electrolyte according to claim 1 or 2, having a lithium ionic conductivity at room temperature superior or equal to $2.0 \times 10^{-5}$ S/cm and inferior or equal to $3.0 \times 10^{-5}$ S/cm, preferably superior or equal to $2.5 \times 10^{-5}$ S/cm and inferior or equal to $3.0 \times 10^{-5}$ S/cm.

6. The solid solution electrolyte according to claim 1 or 2, comprising a crystal structure having an XRD pattern measured at a wavelength of 1.5418Å comprising a first peak having a first intensity and a second peak having a second intensity, said first and second peaks being present in a range of $2\theta$ superior or equal to 27.5 and inferior or equal to $30.0 \pm 0.5°$, said XRD pattern being furthermore free of peaks at $37.0 \pm 0.5° \leq 2\theta \leq 47.0 \pm 0.5°$ having an intensity superior to said first or second intensity.

7. The solid solution electrolyte according to claim 1 or 2, comprising a crystal structure having an XRD pattern measured at a wavelength of 1.5418Å comprising a first peak having a first intensity and a second peak having a second intensity, said first and second peaks being present in a first range of $2\theta$ superior or equal to 27.5 and inferior or equal to 30.0

$\pm0.5°$, wherein in a second range of $2\theta$ superior or equal to 21.0 and inferior or equal to $25.0\pm0.5°$, said XRD pattern has no more than three peaks, each of said three peaks having an intensity superior to said first or second intensity.

8. The solid solution electrolyte according to claim 1 or 2, comprising a crystal structure having an XRD pattern measured at a wavelength of 1.5418Å comprising a first peak having a first intensity and a second peak having a second intensity, said first and second peaks being present in a first range of $2\theta$ superior or equal to 27.5 and inferior or equal to 30.0 $\pm0.5°$, wherein in a second range of $2\theta$ superior or equal to 34.0 and inferior or equal to $36.0\pm0.5°$, said XRD pattern has no more than three peaks, each of said three peaks having an intensity superior to said first or second intensity.

9. A solid-state rechargeable lithium ion battery comprising the solid solution electrolyte according to claim 1 or 2.

10. A solid-state rechargeable lithium ion battery comprising a negative electrode having a Li metal-based anode contacting the solid solution electrolyte according to claim 1 or 2.

11. Use of the solid-state battery according to claim 9 or 10 in an electric vehicle, in particular in an electric car, wherein the operating voltage of said battery is superior or equal to 200 V and inferior or equal to 500 V.

12. A catholyte comprising the solid solution electrolyte according claim 1 or 2, and a cathode material having the general formula: $Li_{1+k}M'_{1-k}O_2$ where $M'=Ni_{1-x'-y'-z'}Mn_{x'}Co_{y'}A_{z'}$ with $-0.05\leq k\leq0.05$, $0\leq x'\leq0.40$, $0.05\leq y'\leq0.40$, and $0\leq z'\leq0.05$, wherein A is a doping element which is different to Li, M' and O, said positive active material powder comprising particles having a layered R-3m crystal structure, said catholyte having a $D99\leq50\mu m$ and an ionic conductivity of at least $1.0\times10^{-6}$ S/m, wherein D99 is defined as the particle size at 99% of the cumulative volume% distributions obtained from the method as defined under point D) of the description.

## Patentansprüche

1. Festlösungselektrolyt, der für eine wiederaufladbare Festkörper-Lithiumionenbatterie geeignet ist, umfassend eine Verbindung, die die allgemeine Formel $Li_{(3,5+L+x)}Si_{(0,5+s-x)}P_{(0,5+p-x)}Ge_{2x}O_{4+a}$ aufweist, wobei $-0,10\leq L\leq0,10$, $-0,10\leq s\leq0,10$, $-0,10\leq p\leq0,10$, $-0,40\leq a\leq0,40$ und $0,0\leq x\leq0,30$, vorzugsweise $0,05\leq x\leq0,30$, mehr bevorzugt $0,10\leq x\leq0,30$.

2. Festlösungselektrolyt nach Anspruch 1, wobei die Verbindung eine allgemeine Formel aufweist: $Li_{(3,5+x)}Si_{(0,5-x)}P_{(0,5-x)}Ge_{2x}O_4$.

3. Festlösungselektrolyt nach Anspruch 1 oder 2, der eine Lithiumionenleitfähigkeit von mindestens $10^{-5}$ S/cm bei Raumtemperatur aufweist.

4. Festlösungselektrolyt nach Anspruch 1 oder 2, wobei $0,15\leq x\leq0,30$, vorzugsweise $0,20\leq x\leq0,30$, mehr bevorzugt $0,25\leq x\leq0,30$.

5. Festlösungselektrolyt nach Anspruch 1 oder 2, der eine Lithiumionenleitfähigkeit bei Raumtemperatur von höher oder gleich $2,0\times10^{-5}$ S/cm und niedriger oder gleich $3,0\times10^{-5}$ S/cm, vorzugsweise höher oder gleich $2,5\times10^{-5}$ S/cm und niedriger oder gleich $3,0\times10^{-5}$ S/cm aufweist.

6. Festlösungselektrolyt nach Anspruch 1 oder 2, umfassend eine Kristallstruktur, die ein XRD-Muster aufweist, gemessen bei einer Wellenlänge von 1,5418 Å, umfassend einen ersten Peak, der eine erste Intensität aufweist, und einen zweiten Peak, der eine zweite Intensität aufweist, wobei der erste und der zweite Peak in einem Bereich von $2\theta$ höher oder gleich 27,5 und niedriger oder gleich $30,0\pm0,5°$ vorhanden sind, wobei das XRD-Muster ferner frei von Peaks bei $37,0\pm0,5°\leq2\theta\leq47,0\pm0,5°$ ist, die einer Intensität aufweisen, die höher als die erste oder zweite Intensität ist.

7. Festlösungselektrolyt nach Anspruch 1 oder 2, umfassend eine Kristallstruktur, die ein XRD-Muster aufweist, gemessen bei einer Wellenlänge von 1,5418 Å, umfassend einen ersten Peak, der eine erste Intensität aufweist, und einen zweiten Peak, der eine zweite Intensität aufweist, wobei der erste und der zweite Peak in einem ersten Bereich von $2\theta$ höher oder gleich 27,5 und niedriger oder gleich $30,0\pm0,5°$ vorhanden sind, wobei in einem zweiten Bereich von $2\theta$ höher oder gleich 21,0 und niedriger oder gleich $25,0\pm0,5°$, das XRD-Muster nicht mehr als drei Peaks aufweist und jeder der drei Peaks eine Intensität aufweist, die höher als die erste oder zweite Intensität ist.

8. Festlösungselektrolyt nach Anspruch 1 oder 2, umfassend eine Kristallstruktur, die ein XRD-Muster aufweist, gemessen bei einer Wellenlänge von 1,5418 Å, umfassend einen ersten Peak, der eine erste Intensität aufweist, und einen zweiten Peak, der eine zweite Intensität aufweist, wobei der erste und der zweite Peak in einem ersten Bereich von 2 θ höher oder gleich 27,5 und niedriger oder gleich 30,0±0,5° vorhanden sind, wobei in einem zweiten Bereich von 2 θ höher oder gleich 34,0 und niedriger oder gleich 36,0±0,5°, das XRD-Muster nicht mehr als drei Peaks aufweist und jeder der drei Peaks eine Intensität aufweist, die höher als die erste oder zweite Intensität ist.

9. Wiederaufladbare Festkörper-Lithiumionenbatterie, umfassend den Festlösungselektrolyt nach Anspruch 1 oder 2.

10. Wiederaufladbare Festkörper-Lithiumionenbatterie, umfassend eine negative Elektrode, die eine Anode auf Li-Metall-Basis aufweist, die mit dem Festlösungselektrolyt nach Anspruch 1 oder 2 in Kontakt steht.

11. Verwendung der Festkörperbatterie nach Anspruch 9 oder 10 in einem Elektrofahrzeug, insbesondere in einem Elektroauto, wobei die Betriebsspannung dieser Batterie höher oder gleich 200 V und niedriger oder gleich 500 V ist.

12. Katholyt, umfassend den Festlösungselektrolyt nach Anspruch 1 oder 2 und ein Kathodenmaterial, das die allgemeine Formel aufweist: $Li_{i+k}M'_{1-k}O_2$, wobei $M'=Ni_{1-x'-y'-z'}Mn_{x'}Co_{y'}A_{z'}$ mit $-0,05{\leq}k{\leq}0,05$, $0{\leq}x'{\leq}0,40$, $0,05{\leq}y'{\leq}0,40$ und $0{\leq}z'{\leq}0,05$, wobei A ein Dotierelement ist, das sich von Li, M' und O unterscheidet, das positive Aktivmaterialpulver umfassend Partikel, die eine geschichteten R-3m-Kristallstruktur aufweisen, wobei der Katholyt eine $D99 \leq 50\ \mu m$ und eine Ionenleitfähigkeit von mindestens $1,0{\times}10^{-6}$ S/m aufweist, wobei D99 als die Partikelgröße bei 99 % der kumulierten Volumenprozentverteilungen definiert ist, die aus dem unter Punkt D) der Beschreibung definierten Verfahren erhalten werden.

**Revendications**

1. Électrolyte en solution solide approprié pour une batterie lithium-ion solide rechargeable comprenant un composé ayant une formule générale $Li_{(3,5+L+x)}Si_{(0,5+s-x)}P_{(0,5+p-x)}Ge_{2x}O_{4+a}$ où $-0,10 \leq L \leq 0,10$, $-0,10 \leq s \leq 0,10$, $-0,10 \leq p \leq 0,10$, $-0,40 \leq a \leq 0,40$, et $0,0 \leq x \leq 0,30$, de préférence $0,05 \leq x \leq 0,30$, plus préférablement $0,10 \leq x \leq 0,30$.

2. Électrolyte en solution solide selon la revendication 1, dans lequel ledit composé répond à la formule générale : $Li_{(3,5+x)}Si_{(0,5-x)}P_{(0,5-x)}Ge_{2x}O_4$.

3. Électrolyte en solution solide selon la revendication 1 ou 2, ayant une conductivité ionique du lithium d'au moins $10^{-5}$ S/cm à température ambiante.

4. Électrolyte en solution solide selon la revendication 1 ou 2, dans lequel $0,15 \leq x \leq 0,30$, de préférence $0,20 \leq x \leq 0,30$, plus préférablement $0,25 \leq x \leq 0,30$.

5. Électrolyte en solution solide selon la revendication 1 ou 2, ayant une conductivité ionique du lithium à température ambiante supérieure ou égale à $2,0 \times 10^{-5}$ S/cm et inférieure ou égale à $3,0 \times 10^{-5}$ S/cm, de préférence supérieure ou égale à $2,5 \times 10^{-5}$ S/cm et inférieure ou égale à $3,0 \times 10^{-5}$ S/cm.

6. Électrolyte en solution solide selon la revendication 1 ou 2, comprenant une structure cristalline ayant un motif XRD mesuré à une longueur d'onde de 1,5418 Å comprenant un premier pic ayant une première intensité et un second pic ayant une seconde intensité, lesdits premier et second pics étant présents dans une plage de 2θ supérieure ou égale à 27,5 et inférieure ou égale à 30,0 ± 0,5°, ledit motif XRD étant en outre exempt de pics à 37,0 ± 0,5° ≤ 2θ ≤ 47,0 ± 0,5° ayant une intensité supérieure à ladite première ou seconde intensité.

7. Électrolyte en solution solide selon la revendication 1 ou 2, comprenant une structure cristalline ayant un motif XRD mesuré à une longueur d'onde de 1,5418 Å comprenant un premier pic ayant une première intensité et un second pic ayant une seconde intensité, lesdits premier et second pics étant présents dans une première plage de 2θ supérieure ou égale à 27,5 et inférieure ou égale à 30,0 ± 0,5°, dans lequel dans une seconde plage de 2θ supérieure ou égale à 21,0 et inférieure ou égale à 25,0 ± 0,5°, ledit motif XRD ne présente pas plus de trois pics, chacun desdits trois pics ayant une intensité supérieure à ladite première ou seconde intensité.

8. Électrolyte en solution solide selon la revendication 1 ou 2, comprenant une structure cristalline ayant un motif XRD mesuré à une longueur d'onde de 1,5418 Å comprenant un premier pic ayant une première intensité et un second pic ayant une seconde intensité, lesdits premier et second pics étant présents dans une première plage de 2θ supérieure ou égale à 27,5 et inférieure ou égale à 30,0 ± 0,5°, dans lequel dans une seconde plage de 2θ supérieure ou égale à 34,0 et inférieure ou égale à 36,0 ± 0,5°, ledit motif XRD ne présente pas plus de trois pics, chacun desdits trois pics ayant une intensité supérieure à ladite première ou seconde intensité,

9. Batterie lithium-ion solide rechargeable comprenant l'électrolyte en solution solide selon la revendication 1 ou 2.

10. Batterie lithium-ion solide rechargeable comprenant une électrode négative ayant une anode à base de métal Li en contact avec l'électrolyte en solution solide selon la revendication 1 ou 2.

11. Utilisation de la batterie solide selon la revendication 9 ou 10 dans un véhicule électrique, notamment dans une voiture électrique, dans laquelle la tension de fonctionnement de ladite batterie est supérieure ou égale à 200 V et inférieure ou égale à 500 V.

12. Catholyte comprenant l'électrolyte en solution solide selon la revendication 1 ou 2, et un matériau cathodique répondant à la formule générale : $Li_{i+k}M'_{1-k}O_2$ où M' = $Ni_{1-x'-y'-z'}Mn_{x'}Co_{y'}A_{z'}$ avec - $0,05 \leq k \leq 0,05$, $0 \leq x' \leq 0,40$, $0,05 \leq y' \leq 0,40$ et $0 \leq z' \leq 0,05$, où A est un élément dopant différent de Li, M' et O, ladite poudre de matière active positive comprenant des particules ayant une structure cristalline en couches R-3m, ledit catholyte ayant un $D99 \leq 50$ $\mu$m et une conductivité ionique d'au moins $1,0 \times 10^{-6}$ S/m, D99 étant défini comme la taille des particules à 99 % des distributions cumulées en % de volume obtenues à partir du procédé tel que défini au point D) de la description.

Figure 1

Figure 2

Figure 3

Figure 4

Figure 5

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101547972 B1

**Non-patent literature cited in the description**

- **WANG, DAWEI**. *Solid State Ionics*, 2015, vol. 283, 109-114
- **CHOI, JI-WON et al.** *Solid State Ionics*, 2016, vol. 289, 173-179
- **SOKSEIHA et al.** *Chem. Mater*, 2018, vol. 30, 5573-5582
- **KAMPHORST**. *Solid State Ionics*, 1980, vol. 1, 187-197
- **BURMAKIN**. *Russian Journal of Electrochemistry*, 2010, vol. 46 (2), 243-246